Europäisches Patentamt

European Patent Office

Office européen des brevets

(11) Publication number: **0 150 007 B1**

# EUROPEAN PATENT SPECIFICATION

(45) Date of publication of patent specification: **25.03.92** (51) Int. Cl.[5]: **C04B 35/44**, C25C 7/00

(21) Application number: **85100122.2**

(22) Date of filing: **08.01.85**

(54) Use of magnesium spinel in light metal reduction cells.

(30) Priority: **09.01.84 US 569082**

(43) Date of publication of application:
**31.07.85 Bulletin 85/31**

(45) Publication of the grant of the patent:
**25.03.92 Bulletin 92/13**

(84) Designated Contracting States:
**BE DE FR GB IT NL**

(56) References cited:
**EP-A- 0 116 147
FR-A- 1 301 833
FR-A- 2 459 788**

**GLASS AND CERAMICS, vol. 39, nos. 1/2,
January-February 1982, pages 89-92, Plenum
Publishing Co., New York, US; M.V.
GLAZACHEVA et al.: "Refractory material
based on alumina-magnesia spinel"**

(73) Proprietor: **THE DOW CHEMICAL COMPANY
2030 Dow Center Abbott Road P.O. Box 1967
Midland Michigan 48640-1967(US)**

(72) Inventor: **Henslee, Walter W.
58 S. Shamrock Ct.
Lake Jackson Texas 77566(US)**
Inventor: **Lindsey, John S.
3911 W. Valley
Missouri City Texas 77459(US)**
Inventor: **Morrow, Stanley J.
2130 Hwy.288
Richwood Texas 77531(US)**

(74) Representative: **Casalonga, Axel et al
BUREAU D.A. CASALONGA - JOSSE Moras-
sistrasse 8
W-8000 München 5(DE)**

EP 0 150 007 B1

## Description

The production of light metals, e.g., magnesium and aluminum, by the electrolytic winning from their molten salts, is old and well documented. Similarly are the maintenance problems of such cells.

Refractories for use in magnesium reduction cell service must function in an extremely hostile environment. The agents potentially involved in chemical attack on the materials of construction include the molten salts, HCl, chlorine gas, steam and molten metal, all at temperatures above about 650°C. Since magnesium metal is one of the more active metals in the periodic table toward oxidation it poses a significant problem in selecting materials of construction for production cells even when substantially free of the elements in a production cell, as for example, molten metal handling and casting operations, and care must be taken in selecting material of construction because of the oxidation and reaction potential of these light metals. For example, refractories which survive in one area of the cell are unable to withstand direct contact with the molten or gaseous metal and vice versa.

In addition to the harsh chemical environment, large thermal gradients are maintained across refractories. Also, rapid thermal cycling occurs in operations such as feeding, metal removal and refractory repair. These thermal stresses accompanied by the physical intrusion of bath salts and vapors into the body of the refractory and the heater lines which, as the penetration deepens, undergoes numerous freeze-thaw cycles, act to fracture and break up refractory structures. It has been observed over the many years of evaluation and analytical investigation of refractory materials, particularly in magnesium reduction cell service, that these three factors, chemical attack, thermal shock and physical intrusion of salts, work in concert to degrade cell refractory materials. The various combinations of these elements in the different zones of the cell accelerate the physical deterioration of the materials of construction. Conventional cell materials are steel, graphite, alumina, beta alumina and alumina-silica. Steel and graphite are subject to oxidation and high heat conductivity. Therefore, where possible alumina and aluminasilica constitute most of the refractory shapes, castables, mortars and the like used as components in cell construction.

During investigations of cell refractory failures, it was discovered that while the cell is producing magnesium metal at the electrode surface, it is producing aluminum metal and silicon metal in certain parts of the refractory system when such are composed of alumina and/or silica. Depending on its local environment, the silica undergoes reduction to the elemental state and may remain as Si° or may alloy with magnesium to form magnesium silicide. All types of alumina investigated when exposed to molten magnesium convert, albeit not uniformly but locally, to aluminum metal and magnesium aluminum oxide spinel, $MgAl_2O_4$ and if silicon is present the aforesaid reactions also occur. Further, as in the case of silicon, some part of the aluminum will combine with elemental magnesium to form the usual alloys. It was initially thought that this reaction was driven by the electrochemical nature of the cell. It has now been discovered, however, that this is not the case. Experiments in which several different types of aluminas ($\alpha$, $\beta$ and $\delta$) were exposed to molten magnesium metal or magnesium vapors outside a cell environment produced the same general result, for example, with regards to the alumina content of the refractory - $MgAl_2O_4$ + Al°. The extent of the reaction appears to depend upon the crystal form and surface area exposed. Thus, alumina with low surface areas and more stable crystal form, such as high density alpha aluminum oxide, are the most resistant to attack but even these will undergo some reaction in time.

A few researchers have reported similar reactions between aluminum metal and MgO refractories, Judd, M.S. and Nelson, J.A., INTERACTION OF MOLTEN ALUMINUM AND MAGNESIUM OXIDE REFRACTORIES, Ceramic Bulletin, 55 No. 7 (1976) page 643; ALUMINUM ALLOYS CONTAINING MAGNESIUM AND ALUMINUM OXIDE, Lindsay, J.G., Bakker, W.T. and Dewing, E.W., J. American Ceramic Society, 47 (1964) pages 90-94; and Jynge, H. and Motzfeldt, K., REACTIONS BETWEEN MOLTEN MAGNESIUM AND REFRACTORY OXIDES, Electrochimica Acta, 25 (1980) page 139, reporting on the reaction of magnesium with aluminum oxide or aluminosilicate at temperatures higher than those normally used in a reduction cell. However, there seems to be no information in the literature concerning the exposure of refractories containing magnesium aluminum oxide spinel to molten magnesium or magnesium alloys nor their use in magnesium service or even a suggestion to that effect.

In accordance with the present invention, there is disclosed a refractory material for use in electrochemical reduction cells for the reduction of magnesium or magnesium alloys as well as molten metal holding and melting furnaces and transfer systems, in the production, melting, casting, molding or transfer of magnesium or magnesium alloys.

The refractory material or lining consists of a magnesium aluminum oxide spinel derived by calcining a coprecipitation product of magnesium and aluminum salts from an aqueous solution.

The spinel may be obtained by pressing or extruding said calcined coprecipitation product which may also contain aggregates of sintered spinel, which pressed or extruded shapes are thereafter subjected to temperatures at or above the operating temperatures such shapes will experience in service.

The material of the present invention may be applied by gunning, dipping, painting, spraying, plasma spraying, electrodeposition, vapor deposition or other conventional techniques for coating refractories and metals.

In accordance with the present invention, refractory components may be preformed into a shape using said coprecipitated form of the spinel with or without more highly calcined or sintered forms of spinel, all fully disclosed in US 4,400,431, and EP 0,113,886.

The exact nature of the reactive spinel, as well as the manner and formula for phosphate bonding systems are fully disclosed in EP-A-116,147. The reactive $MgAl_2O_4$ spinel is derived from a coprecipitation process in which a mixture of magnesium aluminum hydroxides($Mg_xAl_y(OH)_z$) and aluminum hydroxides and/or aluminum oxyhydroxides are produced.

Other techniques for forming objects are disclosed in US 4,394,455 and US 4,439,532.

It is understood that the term spinel as used herein applies to stoichiometric spinel $MgAl_2O_4$, as well as to the well-known solid solution compositions of magnesium aluminum oxide.

In a representative example of the application of the present invention, a laboratory scale electrolytic magnesium cell was constructed using a one-liter quartz beaker with suitable insulating refractory around the exterior. A cage was fashioned from a quartz rod to hold small refractory blocks for the tests between the cathode and the anode. The cell was charged with the usual mixture of molten salts (e.g., $MgCl_2$, NaCl, KCl) and a dc voltage applied to the electrodes. Magnesium metal is produced in such a test cell with periodic feeding of the cell and metal removal from it. This provides an accelerated test due to the proximity of the refractory materials and the electrodes.

In such tests, pure spinel materials, as dense blocks, typically survived more than 100 hours of continuous operation. Most commercially available alumina and alumina-silica materials and mortars based thereon failed completely in less than 50 hours, often with extensive blackening. Analytical data showed the reaction chemistry disclosed above does occur with respect to alumina and alumina-silicate species, pure aluminum and silicon metals were produced as well as the magnesium oxidation product in the form of a spinel.

## Claims

1. An electrochemical reduction cell for the reduction of magnesium or magnesium alloys with a refractory lining, wherein the refractory lining consists of a magnesium aluminum oxide spinel derived by calcining a coprecipitation product of magnesium and aluminum salts from an aqueous solution.

2. The cell of Claim 1 wherein the spinel is obtained by pressing or extruding said calcined coprecipitation product which may also contain aggregates of sintered spinel, which pressed or extruded shapes are thereafter subjected to temperatures at or above the operating temperatures such shapes will experience in service.

3. Holding and transfer system for molten magnesium or magnesium alloys and melting furnaces for magnesium or magnesium alloys with a refractory lining, wherein the refractory lining consists of a magnesium aluminum oxide spinel derived by calcining a coprecipitation product of magnesium and aluminum salts from an aqueous solution.

4. Holding, transfer systems and melting furnaces of Claim 3 wherein the spinel is obtained by pressing or extruding said calcined coprecipitation product which may also contain aggregates of sintered spinel, which pressed or extruded shapes are thereafter subjected to temperatures at or above the operating temperatures such shapes will experience in service.

## Revendications

1. Cellule de réduction électrochimique pour la réduction du magnésium ou d'alliage du magnésium, comportant un revêtement réfractaire, dans laquelle le revêtement réfractaire est constitué d'un spinelle d'oxyde de magnésium et d'aluminium obtenu en calcinant un coprécipité de sels de magnésium et d'aluminium à partir d'une solution aqueuse.

2. Cellule selon la revendication 1, dans laquelle le spinelle s'obtient en comprimant ou en extrudant ledit produit de coprécipitation, calciné, qui peut également contenir des agrégats de spinelle fritté, corps de forme comprimés ou extrudés étant ensuite soumis à des températures égales ou supérieures aux températures de service que ces produits vont subir en service.

3. Système de stockage et de transfert pour le magnésium fondu ou les alliages de magnésium fondus et fours de fusion pour le magnésium ou les alliages de magnésium, comportant un revêtement réfractaire, dans lesquels le revêtement réfractaire est constitué d'un spinelle d'oxyde de magnésium et d'aluminium obtenu en calcinant un coprécipité de sels de magnésium et d'aluminium à partir d'une solution aqueuse.

4. Système de stockage et de transfert et fours de fusion selon la revendication 3, dans lesquels le spinelle s'obtient en comprimant ou en extrudant ledit produit coprécipité, calciné, qui peut également contenir des agrégats de spinelle fritté, les corps de forme comprimés ou extrudés étant ensuite soumis à des températures égales ou supérieures aux températures de service que ces produits vont subir en service.

**Patentansprüche**

1. Eine elektrochemische Reduktionszelle für die Reduktion von Magnesium oder Magnesiumlegierungen mit einer feuerfesten Auskleidung, worin die feuerfeste Auskleidung aus einem Magnesiumaluminiumoxid-Spinell besteht, der erhalten wurde durch Calzinieren eines Copräzipitationsprodukts von Magnesium- und Aluminiumsalzen aus einer wäßrigen Lösung.

2. Zelle nach Anspruch 1, worin der Spinell erhalten wird durch Verpressen oder Extrudieren des calzinierten Copräzipitationsproduktes, das auch Aggregate von gesintertem Spinell enthalten kann, wobei die gepreßten oder extrudierten Formen in der Folge Temperaturen bei oder oberhalb der Betriebstemperaturen, welche solche Formen im Gebrauch erfahren werden, unterworfen werden.

3. Warmhalte (holding)- und Transfersystem für geschmolzenes Magnesium oder Magnesiumlegierungen und Schmelzöfen für Magnesium oder Magnesiumlegierungen mit einer feuerfesten Auskleidung, worin die feuerfeste Auskleidung aus einem Magnesiumaluminiumoxid-Spinell besteht, der erhalten wurde durch Calzinieren eines Copräzipitationsprodukts von Magnesium-und Aluminiumsalzen aus einer wäßrigen Lösung.

4. Warmhalte-, Transfersysteme und Schmelzöfen gemäß Anspruch 3, worin der Spinell erhalten wird durch Verpressen oder Extrudieren des calzinierten Copräzipitationsprodukts, das auch Aggregate von gesintertem Spinell enthalten kann, wobei die verpreßten oder extrudierten Formen in der Folge Temperaturen bei oder oberhalb der Betriebstemperaturen, die solche Formen im Gebrauch erfahren werden, unterworfen werden.